# FASCICULE DE BREVET EUROPEEN

(11) **EP 2 178 758 B1**
(45) Date de publication et mention de la délivrance du brevet: **09.01.2013**
(21) Numéro de dépôt: 08786491.4
(22) Date de dépôt: 28.07.2008
(51) Int. Cl.: B64D 29/06, E05C 19/08

(54) **DISPOSITIF DE LIAISON, DESTINE A RELIER UN PREMIER ET UN SECOND ELEMENT MOBILE L'UN PAR RAPPORT A L'AUTRE**
KOPPLUNGSVORRICHTUNG ZUR VERBINDUNG ZWEIER IM VERHÄLTNIS ZUEINANDER BEWEGLICHER ELEMENTE
COUPLING DEVICE INTENDED TO CONNECT FIRST AND SECOND ELEMENTS WHICH CAN MOVE RELATIVE TO ONE ANOTHER

(30) Priorité: 20.08.2007 FR 0705930
(43) Date de publication de la demande: 28.04.2010
(60) Demande divisionnaire: 11154846.7
(73) Titulaire: Aircelle, 76700 Gonfreville L'Orcher (FR)
(72) Inventeur: SOULIER, Pascal-Marie Paul Marcel, F-76600 Le Havre (FR); DE SORBAY, Aurélie, F-76600 Le Havre (FR)
(74) Mandataire: Chevalier, Renaud Philippe
(86) Numéro de dépôt international: PCT/EP2008/059849
(87) Numéro de publication internationale: WO 2009/024431

(56) Documents cités:
- EP-A- 0 155 887
- EP-A- 1 167 186
- EP-A- 1 245 769
- EP-A- 1 336 707
- EP-A- 1 927 711
- FR-A- 2 622 930
- FR-A1- 2 920 133
- US-A- 4 585 189

## Description

L'invention concerne un dispositif de liaison, destiné à relier un premier et un second éléments mobiles l'un par rapport à l'autre.

Un dispositif de liaison est notamment utilisé dans le domaine de l'aéronautique, en particulier afin d'équiper des nacelles.

Une nacelle est un élément de carénage permettant de protéger un réacteur d'un aéronef. Une nacelle comporte généralement une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail et une position de maintenance.

Des dispositifs de verrouillage sont disposés au niveau de zones de jonction entre les deux éléments articulés, disposées en partie inférieure, c'est-à-dire à 6 heures, et en partie supérieure, c'est-à-dire à 12 heures, afin d'éviter une ouverture de la nacelle durant le vol.

En partie supérieure de la nacelle, le mat est disposé entre les deux demi-coquilles de sorte qu'il est parfois nécessaire de prévoir un dispositif de liaison permettant de relier les deux demi-coquilles malgré leur écartement. D'une manière générale, les éléments de liaison permettent le passage d'efforts de traction d'une demi-coquille à une autre, le passage des efforts de compression étant assuré par l'intermédiaire de bielles de compression dédiées appelés « bielles bumper ».

Ainsi, un dispositif de liaison classique comporte une bielle reliée à la première et à la seconde demi-coquilles, respectivement au niveau d'une première et d'une seconde extrémités, au moins une des extrémités de la bielle comportant une tête destinée à coopérer avec des moyens de verrouillage de la demi-coquille correspondante de manière à réaliser la fixation amovible de la bielle sur l'élément mobile correspondant.

Il est alors possible de séparer la bielle d'au moins l'une des deux demi-coquilles afin de permettre l'écartement de celles-ci lors d'opérations de maintenance.

Ce type de dispositif de liaison présente les inconvénients exposés ci-après.

Une fois que la bielle est détachée de la demi-coquille correspondante, celle-ci tombe sous l'effet de la gravité.

Il est généralement prévu un système de rampe de repositionnement afin de permettre le réengagement de celle-ci par rapport à la demi-coquille correspondante lors de la fermeture de la nacelle, de manière à ce que la tête de la bielle coopère avec les moyens de verrouillage. Le système de rampe de repositionnement est notamment installé au niveau du réacteur.

Un système de ce type ne permet pas d'assurer de manière fiable le repositionnement de la bielle. Il pose en outre des problèmes d'encombrement et de gestion d'interface entre la nacelle elle-même et le réacteur. Un autre inconvénient provient du fait de l'introduction d'efforts parasites issus de la vibration ou de la dilatation thermique dues au réacteur.

La demande de brevet EP 1 927 711 constitue un art antérieur au titre de l'article 54(3) CBE et décrit un dispositif de liaison intégrant un organe de guidage télescopique servant au support et au guidage de la bielle lors du déplacement des éléments mobiles. Ladite demande est considérée comme l'art antérieur le plus proche et décrit les charactéristiques du préambule de la revendication 1.

La demande de brevet EP 1 336 707 décrit un système de fermeture interposé entre deux éléments aptes à occuper, l'un par rapport à l'autre, une position ouverte et une position fermée, ledit système comprenant au moins un mécanisme de verrouillage principal et un mécanisme de verrouillage de secours.

L'invention vise à remédier en tout ou partie à ces inconvénients en proposant un dispositif de liaison peu encombrant, permettant un réengagement fiable de la bielle par rapport à la demi-coquille correspondante, sans contact ou interférence avec le réacteur.

A cet effet, l'invention concerne un dispositif de liaison, destiné à relier un premier et un second éléments mobiles l'un par rapport à l'autre, comportant une bielle reliée au premier et au second éléments mobiles respectivement au niveau d'une première et d'une seconde extrémités, au moins une des extrémités de la bielle comportant une tête destinée à coopérer avec des moyens de verrouillage de l'élément mobile correspondant de manière à réaliser la fixation amovible de la bielle sur l'élément mobile correspondant le dispositif de liaison comportant au moins un organe de guidage télescopique servant au support et au guidage de la bielle lors du déplacement des éléments mobiles, comportant une première et une seconde extrémités, destinées à être rattachées respectivement à un premier et un second éléments supports, la tête étant disposée au niveau de la seconde extrémité de la bielle, la seconde extrémité de l'organe de guidage télescopique étant destinée à être rattachée au second élément mobile, la première extrémité de l'organe de guidage télescopique étant montée de manière coulissante sur la bielle, caractérisé en ce que la première extrémité de l'organe de guidage télescopique présente au moins un doigt inséré dans au moins une rainure ou au moins une lumière oblongue ménagée dans la bielle.

Ainsi, dans le cadre spécifique mais non exhaustif de l'application du dispositif de liaison selon l'invention à une nacelle, le dispositif de liaison permet de soutenir la bielle après désengagement de la tête par rapport aux moyens de verrouillage.

De cette manière, même après écartement des deux éléments mobiles, à savoir des deux demi-coquilles dans le cas spécifique précité d'une nacelle, la bielle retrouve sa position d'origine après rapprochement des deux éléments mobiles de sorte que la tête puisse à nouveau s'engager dans les moyens de verrouillage.

Le coulissement du doigt à l'intérieur de la lumière oblongue permet le coulissement de l'organe télescopique par rapport à la bielle.

Selon une forme de réalisation de l'invention, l'organe de guidage télescopique est déplaçable entre une position déployée et une position rétractée, la bielle présentant un logement s'étendant selon son axe, permettant le logement de l'organe de guidage dans sa position rétractée.

Cette caractéristique permet d'augmenter la compacité du dispositif de liaison. Un autre avantage est celui de réduire le nombre et/ou la complexité des dispositifs de réengagement, et donc de fiabiliser le réengagement tout en réduisant la masse.

Préférentiellement, la première extrémité de la bielle comporte des moyens de fixation, destinés à la fixation de la bielle sur le premier élément mobile, formant des moyens élastiques lors de la compression de la bielle, ou lors de traction de la bielle, et formant une butée de passage d'efforts lors de la traction de la bielle, respectivement lors de la compression de la bielle.

Les moyens de fixation précités permettent d'éviter que la bielle soit soumise à des contraintes de compression élevées, le passage des efforts de compression étant assuré par les bielles de compression ou « bielles bumpers ».

L'invention concerne en outre une nacelle de turboréacteur comprenant une section avant d'entrée d'air, une section médiane destinée à entourer une soufflante du turboréacteur, et une section arrière formée à partir d'au moins une première et une seconde demi-coquilles montées mobiles en rotation sur un mat de manière à pouvoir se déployer chacune entre une position de travail dans laquelle les demi-coquilles sont rapprochées l'une de l'autre et une position de maintenance dans laquelle les demi-coquilles sont écartées l'une de l'autre, caractérisée en ce que la section arrière est équipée d'au moins un dispositif de liaison selon l'invention, l'organe de guidage télescopique étant rattaché à la seconde demi-coquille au niveau de sa seconde extrémité, la première extrémité de la bielle étant rattachée à la première demi-coquille.

En outre, l'invention concerne un aéronef, caractérisé en ce qu'il comporte au moins une nacelle selon l'invention.

De toute façon, l'invention sera bien comprise à l'aide de la description qui suit en référence au dessin schématique annexé représentant, à titres d'exemples, plusieurs formes de réalisation de ce dispositif de liaison.
Figure 1 est une vue schématique d'une nacelle en coupe longitudinale;
Figure 2 est une vue éclatée de la nacelle, en perspective et vue de l'avant ;
Figure 3 est une vue d'une forme de réalisation du dispositif de liaison, en position fermée de la nacelle ;
Figure 4 est une vue correspondant à la figure 3, en position ouverte de la nacelle ;

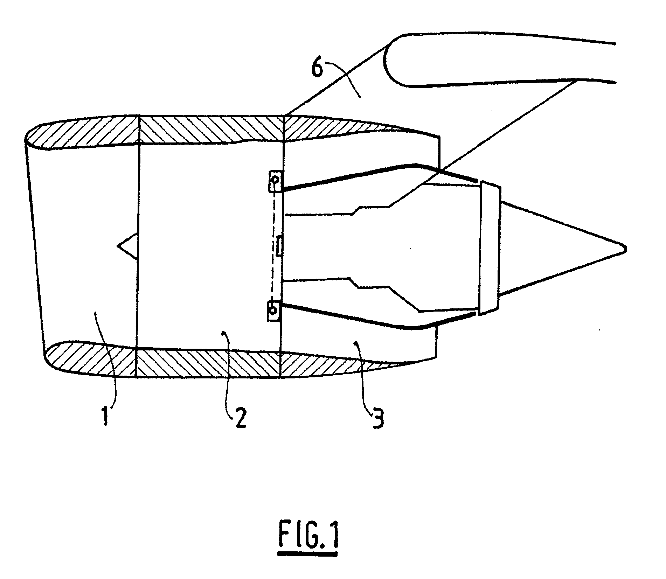

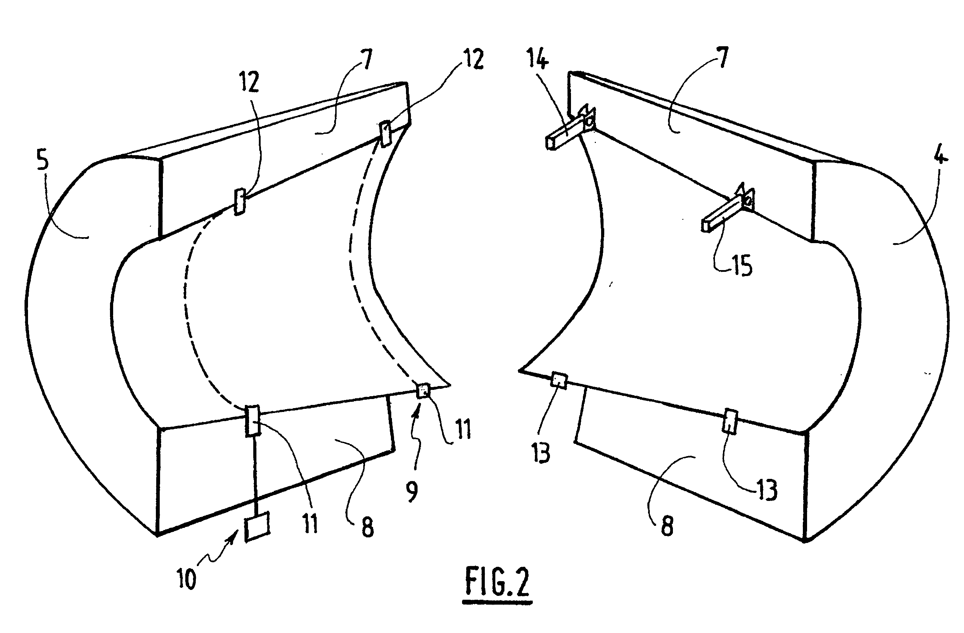

Les figures 1 et 2 représentent la structure générale d'une nacelle de turboréacteur selon l'invention. Celle-ci comprend une section avant 1 d'entrée d'air, une section médiane 2 destinée à entourer une soufflante du turboréacteur, et une section arrière 3 formée à partir d'au moins une première et une seconde demi-coquilles 4, 5 montées mobiles en rotation sur un mat 6 d'un aéronef de manière à pouvoir se déployer chacune entre une position de travail et une position de maintenance.

Chaque demi-coquille 4, 5 présente la forme générale d'un demi-cylindre creux, délimitant deux zones de jonction avec la demi-coquille lui faisant face, à savoir une zone de jonction supérieure 7 et une zone de jonction inférieure 8.

Les positions inférieures et supérieures sont également appelées respectivement positions 6 heures et 12 heures.

La nacelle est équipée d'un premier et d'un second dispositifs de verrouillage 9, 10. Il est à noter que, pour des raisons de présentation, seuls deux de ces dispositifs sont représentés.

Chaque dispositif de verrouillage 9, 10 comporte un premier système de verrouillage 11 ainsi qu'un second système de verrouillage 12.

Les premiers systèmes de verrouillage 11 sont montés sur la seconde demi-coquille 5 et sont aptes à se verrouiller sur des organes de retenue 13 correspondants, montés sur la première demi-coquille 4.

Les seconds systèmes de verrouillage 12 sont montés sur la seconde demi-coquille 5 et coopèrent respectivement avec un premier et un second dispositifs de liaison 14, 15 montés sur la première demi-coquille 4, au niveau de la zone de jonction supérieure 7.

Les dispositifs de liaison 14, 15 permettent de relier les deux demi-coquilles 4, 5 malgré la présence du mat 6 entre celles-ci au niveau de leur zone de jonction supérieure 7, comme cela est représenté notamment à la figure 6.

On s'intéressera plus particulièrement à la structure et au fonctionnement du premier dispositif de liaison 14.

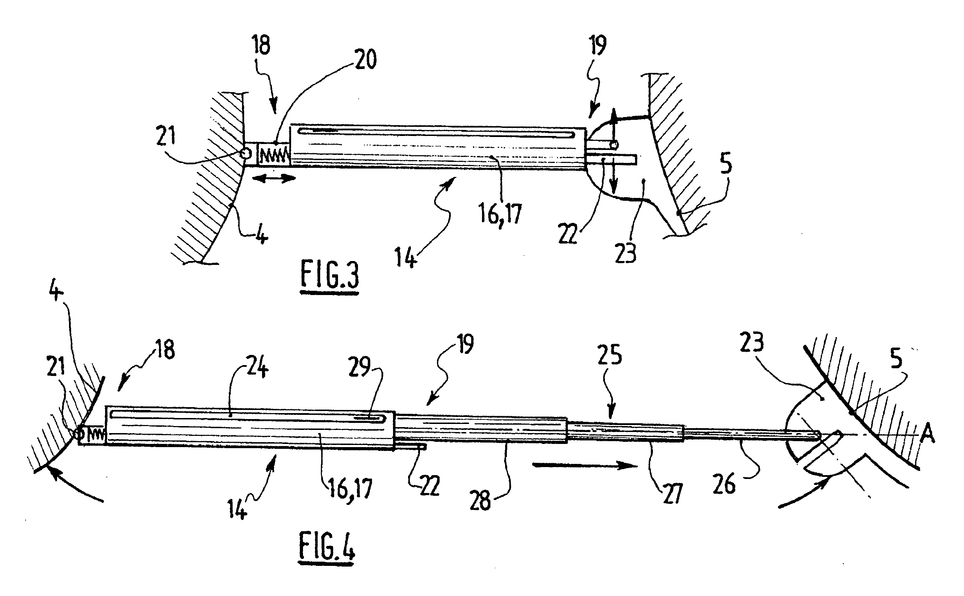

Les figures 3 et 4 représentent une première forme de réalisation du dispositif de liaison selon l'invention, correspondant au premier dispositif de liaison 14 dont la position sur la nacelle est illustrée en figure 2.

Le premier dispositif de liaison 14 comporte une bielle 16 comprenant un corps 17 comportant une première et une seconde extrémités 18, 19 reliées respectivement à la première et à la seconde demi-coquilles 4, 5.

La première extrémité 18 du corps est équipée de moyens de fixation 20, destinés à la fixation de la bielle 16 sur le premier élément mobile 4, formant des moyens élastiques lors de la traction de la bielle 16, et formant une butée permettant le passage d'efforts lors de la compression de la bielle 16. Les moyens de fixation 20 sont eux-mêmes équipés de moyens d'articulation 21 sur la première demi-coquille 4.

Selon une autre possibilité de l'invention, les moyens de fixation 20 forment des moyens élastiques lors de la compression de la bielle 16 et forment une butée permettant le passage d'efforts lors de la traction de la bielle 16.

La seconde extrémité 19 du corps 17 est équipée d'une tête 22 présentant la forme d'une platine, destinée à coopérer avec des moyens de verrouillage 23 de la seconde demi-coquille 5. La structure des moyens de verrouillage 23 est connue de l'homme du métier et ne sera pas détaillée ci-après.

La bielle 16 est ainsi fixée de manière amovible sur la seconde demi-coquille 5 et est articulée sur la première demi-coquille 4.

Le corps 17 de la bielle 16 présente la forme générale d'un U de manière à délimiter deux flancs reliés par une base, chaque flanc étant équipé d'une lumière oblongue 24 s'étendant suivant l'axe A du corps 17.

La bielle 16 comporte en outre un organe de guidage télescopique 25 servant au support et au guidage de la bielle 16 lors du déplacement des demi-coquilles 4, 5.

L'organe de guidage télescopique 25 comporte un premier, un second et un troisième éléments tubulaires 26, 27, 28, montés déplaçables les uns dans les autres entre une position rétractée de l'organe de guidage 25 représentée en figure 3 et une position déployée de celui-ci, représentée en figure 4.

L'organe de guidage télescopique 25 relie de façon permanente la bielle 16 à la seconde demi-coquille 5. Plus précisément, le premier élément tubulaire 26 est monté de manière articulée sur la seconde demi-coquille 5 au niveau d'une extrémité de celui-ci. En outre, le troisième élément tubulaire 28 est logé, au moins en partie, dans un logement de la bielle 16 délimité par l'intérieur du U et comporte deux doigts 29 engagés respectivement dans chacune des lumières oblongues 24 du corps 17 de la bielle 16. Le troisième élément tubulaire 28 est ainsi monté coulissant sur la bielle 16.

En position fermée de la nacelle, c'est-à-dire en position rapprochée des demi-coquilles 4, 5, la tête 22 de la bielle 16 est engagée dans les moyens de verrouillage 23, la bielle 16 assurant alors le passage d'efforts de traction d'une demi-coquille à une autre.

Lors de l'ouverture de la nacelle, en particulier lors d'opérations de maintenance, les moyens de verrouillage 23 sont déverrouillés, et les deux demi-coquilles 4, 5 sont écartées l'une par rapport à l'autre.

Dans ce cas, l'organe de guidage télescopique 25 se déplie, et le troisième élément 28 de celui-ci coulisse par rapport à la bielle 16 par le biais des doigts 29.

Lors de la refermeture de la nacelle, les deux demi-coquilles 4, 5 sont à nouveau rapprochées et l'organe de guidage télescopique 25 se rétracte, de sorte que la tête 22 est progressivement ramenée en regard des moyens de verrouillage 23 de manière à assurer un bon engagement de la tête 22 par rapport à ceux-ci.

De manière classique, les moyens de verrouillage 23 comportent un penne déplaçable en translation, non représenté sur le dessin, l'organe de guidage télescopique 25 étant rattaché aux moyens de verrouillage 23 au droit du penne ce qui permet d'assurer le bon réengagement du doigt de verrouillage 22 dans les moyens de verrouillage.

Simultanément, le troisième élément tubulaire 28 de l'organe de guidage 25 s'insère progressivement dans la bielle 16. De même, le second et le premier éléments tubulaires 26, 27 s'insèrent respectivement dans le troisième et dans le second éléments tubulaires 27, 28 de sorte que le dispositif de liaison 14 retrouve sa position d'origine représentée en figure 3.

Comme il va de soi l'invention ne se limite pas aux seules formes de réalisation de ce dispositif de liaison, décrites ci-dessus à titre d'exemples, mais elle embrasse au contraire toutes les variantes.

## Revendications

1. Dispositif de liaison (14), destiné à relier un premier et un second éléments mobiles (4, 5) l'un par rapport à l'autre, comportant une bielle (16) reliée au premier et au second éléments mobiles (4, 5) respectivement au niveau d'une première et d'une seconde extrémités (18, 19), au moins une des extrémités de la bielle (16) comportant une tête (22) destinée à coopérer avec des moyens de verrouillage (23) de l'élément mobile correspondant (5) de manière à réaliser la fixation amovible de la bielle (16) sur l'élément mobile correspondant (5), le dispositif de liaison (14) comporte au moins un organe de guidage télescopique (25) servant au support et au guidage de la bielle (16) lors du déplacement des éléments mobiles (4, 5), comportant une première et une seconde extrémités (28, 26) destinées à être rattachées respectivement à un premier et un second éléments supports (23, 16), la tête (22) est disposée au niveau de la seconde extrémité (19) de la bielle (16), la seconde extrémité (26) de l'organe de guidage télescopique (25) étant destinée à être rattachée au second élément mobile (5), la première extrémité (28) de l'organe de guidage télescopique (25) étant montée de manière coulissante sur la bielle (16), **caractérisé en ce que** la première extrémité (28) de l'organe de guidage télescopique (25) présente au moins un doigt (29) inséré dans au moins une rainure ou au moins une lumière oblongue (24) ménagée dans la bielle (16).

2. Dispositif de liaison (14) selon la revendication 1, **caractérisé en ce que** l'organe de guidage télescopique (25) est déplaçable entre une position déployée et une position rétractée, la bielle (16) présentant un logement s'étendant selon son axe (A), permettant le logement de l'organe de guidage (25) dans sa position rétractée.

3. Dispositif de liaison (14) selon l'une des revendications 1 ou 2, **caractérisé en ce que** la première extrémité (18) de la bielle (16) comporte des moyens de fixation, destinés à la fixation de la bielle (16) sur le premier élément mobile (4), formant des moyens élastiques lors de la compression de la bielle (16) ou lors de traction de la bielle (16), et formant une butée de passage d'efforts lors de la traction de la bielle (16), respectivement lors de la compression de la bielle (16).

4. Nacelle de turboréacteur comprenant une section avant (1) d'entrée d'air, une section médiane (2) destinée à entourer une soufflante du turboréacteur, et une section arrière (3) formée à partir d'au moins une première et une seconde demi-coquilles (4, 5) montées mobiles en rotation sur un mat (6) de manière à pouvoir se déployer chacune entre une position de travail dans laquelle les demi-coquilles sont rapprochées l'une de l'autre et une position de maintenance dans laquelle les demi-coquilles sont écartées l'une de l'autre, **caractérisée en ce que** la section arrière (3) est équipée d'au moins un dispositif de liaison (14) selon l'une des revendications 1 à 3, l'organe de guidage télescopique (25) étant rattaché à la seconde demi-coquilles au niveau de sa seconde extrémité, la première extrémité (18) de la bielle (16) étant rattachée à la première demi-coquille (4).

5. Aéronef, **caractérisé en ce qu'**il comporte au moins une nacelle selon la revendication 4.

## Claims

1. A connecting device (14), designed to connect first and second moving parts (4, 5) relative to one another, having a connecting rod (16) connected to the first and second moving parts (4, 5) at first and second ends (18, 19), respectively, at least one of the ends of the connecting rod (16) having a head (22) designed to cooperate with locking means (23) of the corresponding moving part (5) so as to fasten the connecting rod (16) removably on the corresponding moving part (5), the connecting device (14) has at least one telescoping guide member (25) serving to support and guide the connecting rod (16) during movement of the moving parts (4, 5), having a first and second end (28, 26) designed to be attached to first and second support elements (23, 16), respectively, the head (22) is positioned at the second end (19) of the connecting rod (16), the second end (26) of the telescoping guide member (25) being designed to be attached to the second moving part (5), the first end (28) of the telescoping guide member (25) being slidingly mounted on the connecting rod (16), **characterized in that** the first end (28) of the telescoping guide member (25) has at least one finger (29) inserted into at least one groove or at least one oblong slot (24) formed in the connecting rod (16).

2. The connecting device (14) according to claim 1, **characterized in that** the telescoping guide member (25) can be moved between a deployed position and a retracted position, the connecting rod (16) having a housing extending along its axis (A), allowing the guide member (25) to be housed in its retracted position.

3. The connecting device (14) according to one of claims 1 or 2, **characterized in that** the first end (18) of the connecting rod (16) has fastening means, designed to fasten the connecting rod (16) on the first moving part (4), forming elastic means during the compression of the connecting rod (16) or during traction of the connecting rod (16), and forming a force passage stop during traction of the connecting rod (16), respectively during the compression of the connecting rod (16).

4. A turbojet engine nacelle comprising a front air intake section (1), a middle section (2) designed to surround a fan of the turbojet engine, and a rear section (3) formed from at least one first and second half-shell (4, 5) rotatably mounted on a mast (6) so as each to be able to deploy between a working position in which the half-shells are close together and a maintenance position in which the half-shells are spaced apart from one another, **characterized in that** the rear section (3) is equipped with at least one connecting device (14) according to one of claims 1 and 3, the telescoping guide member (25) being attached to the second half-shell at its second end, the first end (18) of the connecting rod (16) being attached to the first half-shell (4).

5. An aircraft, **characterized in that** it includes at least one nacelle according to claim 4.

## Patentansprüche

1. Verbindungsvorrichtung (14), ausgelegt, um ein erstes und eine zweites bewegliches Element (4, 5) miteinander zu verbinden, umfassend eine Pleuelstange (16), die mit dem ersten bzw. mit dem zweiten beweglichen Element (4, 5) auf der Ebene eines ersten und eines zweiten Endes (18, 19) verbunden ist, wobei mindestens eines der Enden der Pleuelstange (16) einen Kopf (22) umfasst, der dazu ausgelegt ist, mit Verriegelungsmitteln (23) des entsprechenden beweglichen Elements (5) zusammenzuarbeiten, um die lösbare Befestigung der Pleuelstange (16) auf dem entsprechenden beweglichen Element (5) durchzuführen, wobei die Verbindungsvorrichtung (14) mindestens ein teleskopisches Führungsorgan (25) umfasst, das zur Auflage und zur Führung der Pleuelstange (16) bei der Bewegung der beweglichen Elemente (4, 5) dient, umfassend ein erstes und ein zweites Ende (28, 26), die dazu ausgelegt sind, an ein erstes bzw. ein zweites Auflageelement (23, 16) verbunden zu sein, wobei der Kopf (22) auf der Ebene des zweiten Endes (19) der Pleuelstange (16) angeordnet ist, wobei das zweite Ende (26) des teleskopischen Führungsorgans (25) ausgelegt ist, um mit dem zweiten beweglichen Element (5) verbunden zu sein, wobei das erste Element (28) des teleskopischen Führungsorgans (25) auf gleitende Weise auf der Pleuelstange (16) montiert ist, **dadurch gekennzeichnet, dass** das erste Ende (28) des teleskopischen Führungsorgans (25) mindestens einen Finger (29) aufweist, der in mindestens eine Nut oder mindestens eine längliche kleine Öffnung (24) eingeführt ist, die in der Pleuelstange (16) angebracht ist.

2. Verbindungsvorrichtung (14) nach Anspruch 1, **dadurch gekennzeichnet, dass** das teleskopische Führungsorgan (25) zwischen einer ausgezogenen Position und einer zurückgezogenen Position bewegt werden kann, wobei die Pleuelstange (16) eine Lagerung aufweist, die sich entlang ihrer Achse (A) erstreckt und die Lagerung des Führungsorgans (25) in seiner zurückgezogenen Position ermöglicht.

3. Verbindungsvorrichtung (14) nach einem der Ansprüche 1 oder 2, **dadurch gekennzeichnet, dass** das erste Ende (18) der Pleuelstange (16) Befestigungsmittel umfasst, die dazu ausgelegt sind, die Pleuelstange (16) auf dem ersten beweglichen Element (4) zu befestigen und bei der Kompression der Pleuelstange (16) oder bei der Traktion der Pleuelstange (16) elastische Mittel bilden und einen Anschlag des Kraftdurchgangs bei der Traktion der Pleuelstange (16) bzw. bei der Kompression der Pleuelstange (16) bilden.

4. Triebwerksgondel, umfassend einen vorderen Abschnitt (1) zum Eintritt von Luft, einen mittleren Abschnitt (2), der ausgelegt ist, um einen Niederdruckverdichter des Treibwerks zu umgeben, und einen hinteren Abschnitt (3), der aus mindestens einer ersten und einer zweiten Halbschale (4, 5) gebildet ist, die beweglich in der Drehung auf einer Matte (6) montiert sind, um sich jeweils zwischen einer Arbeitsposition, in der die Halbschalen aneinander angenähert sind, und einer Wartungsposition, in der die Halbschalen voneinander entfernt sind, entfalten zu können,
**dadurch gekennzeichnet, dass** der hintere Abschnitt (3) mit mindestens einer Verbindungsvorrichtung (14) nach einem der Ansprüche 1 bis 3 ausgestattet ist, wobei die teleskopische Führung (25) mit der zweiten Halbschale auf der Ebene ihres zweiten Endes verbunden ist, wobei das erste Ende (18) der Pleuelstange (16) mit der ersten Halbschale (4) verbunden ist.

5. Flugzeug, **dadurch gekennzeichnet, dass** es mindestens eine Gondel nach Anspruch 4 umfasst.
